# EUROPÄISCHE PATENTSCHRIFT

(11) **EP 2 047 580 B1**
(45) Veröffentlichungstag und Bekanntmachung des Hinweises auf die Patenterteilung: **11.10.2017**
(21) Anmeldenummer: 07801461.0
(22) Anmeldetag: 28.07.2007
(51) Int. Cl.: B60R 16/03, H02J 7/34, H02J 7/14

(54) **SYSTEM ZUR SPANNUNGSVERSORGUNG VON ELEKTRISCHEN VERBRAUCHERN EINES KRAFTFAHRZEUGS**
SYSTEM FOR SUPPLYING VOLTAGE TO ELECTRICAL LOADS OF A MOTOR VEHICLE
SYSTÈME D'ALIMENTATION ÉLECTRIQUE DES CHARGES ÉLECTRIQUES D'UN VÉHICULE AUTOMOBILE

(30) Priorität: 04.08.2006 DE 102006036425
(43) Veröffentlichungstag der Anmeldung: 15.04.2009
(73) Patentinhaber: Bayerische Motoren Werke Aktiengesellschaft, 80809 München (DE)
(72) Erfinder: BROESSE, Andreas, 81375 München (DE); POLENOV, Dieter, 80937 München (DE); PROEBSTLE, Hartmut, 86159 Augsburg (DE); HAFKEMEYER, Marcus, 80807 München (DE)
(86) Internationale Anmeldenummer: PCT/EP2007/006693
(87) Internationale Veröffentlichungsnummer: WO 2008/014945

(56) Entgegenhaltungen:
- EP-A- 1 405 767
- EP-A1- 2 047 579
- DE-A1- 10 055 076
- DE-A1- 10 346 856
- US-A- 5 880 951

## Beschreibung

Die Erfindung betrifft ein Bordnetz zur Spannungsversorgung von elektrischen Verbrauchern eines Kraftfahrzeugs.

Bei bekannten Bordnetzen_hat der zur Spannungserzeugung erforderliche Generator eine erhebliche Leistungsaufnahme, die vom Motor des Kraftfahrzeugs bereitgestellt werden muss.

Aus der EP 1 405 767 A ist ein Bordnetz für ein Kraftfahrzeug bekannt. Die Druckschrift beschäftigt sich mit dem Problem, dass die Spannungsstabilisierung des kompletten Bordnetzes nur sehr schwer zu realisieren ist, wenn Verbraucher mit einem kurzfristig anfallenden sehr hohen Stromverbrauch an das Bordnetz gekoppelt werden. Um ein hohes Maß an Funktionssicherheit auch für spannungssensitive Verbraucher zu gewährleisten, wird ein Bordnetz mit einem Normalzweig und mit einem Konstantzweig für spannungssensitive Verbraucher vorgeschlagen. Zwischen den Zweigen ist eine Leistungselektronik vorgesehen, die die im Normalzweig vorhandene Spannung nutzt und mit ihr eine Konstantspannung für die spannungssensitiven Verbraucher erzeugt.

Aus der EP 2 047 579 A1 ist ein System zur Spannungsversorgung von elektrischen Verbrauchern im Bordnetz eines Kraftfahrzeugs bekannt, bei dem das Bordnetz aus mindestens zwei Bordnetz-Bereichen besteht. Der erste Bordnetz-Bereich weist einen elektrischen Generator, eine Fahrzeugbatterie sowie ein oder mehrere erste elektrische Verbraucher auf. Der zweite Bordnetz-Bereich weist einen Doppelschicht-Kondensator bzw. ein sog. Supercap und ein oder mehrere zweite elektrische Verbraucher auf. Zwischen den zwei Bordnetz-Bereichen ist eine Sperrvorrichtung vorgesehen, die einen Stromfluss vom ersten Bordnetz-Bereich in den zweiten Bordnetz-Bereich ermöglicht und einen umgekehrten Stromfluss vom zweiten Bordnetz-Bereich in den ersten Bordnetz-Bereich weitgehend verhindert. Die Ausgangsspannung des elektrischen Generators wird angehoben und der Supercap aufgeladen, wenn ein erster Schwellenwert der elektrischen Spannung im zweiten Bordnetz-Bereich unterschritten wird.

Aufgabe der vorliegenden Erfindung ist die Reduzierung der vom Motor des Kraftfahrzeugs bereitzustellenden Leistung, um das Bordnetz des Kraftfahrzeugs mit ausreichender elektrischer Energie zu versorgen.

Diese Aufgabe wird durch ein Bordnetz zur Spannungsversorgung mit den Merkmalen des Patentanspruchs 1 gelöst. Vorteilhafte Ausgestaltungen der Erfindung sind Gegenstand der abhängigen Ansprüche.

Ein wesentlicher Aspekt der Erfindung besteht darin, die elektrischen Verbraucher im Bordnetz eines Kraftfahrzeugs in eine Gruppe von mindestens zwei Arten elektrischer Verbraucher einzuteilen. Die erste Gruppe von elektrischen (unsensiblen) Verbrauchern arbeitet auch dann zuverlässig, wenn die Spannung relativ stark schwankt und/oder wenn die Spannung relativ niedrig ist, z.B. wenn die Spannung bei einem 12 Volt-Bordnetz auf unter 10 Volt absinkt und/oder zwischen ca. 9 und 16 Volt schwankt.

Die zweite Gruppe von elektrischen (sensiblen) Verbrauchern arbeitet hingegen nur dann zuverlässig, wenn die Spannung nur relativ gering um die Nennspannung schwankt, z.B. wenn die Spannung bei einem 12 Volt-Bordnetz lediglich zwischen ca. 11 und 13 Volt schwankt. Erfindungsgemäß wird das Bordnetz in mindestens zwei Bordnetz-Bereiche aufgeteilt; im ersten Bordnetz-Bereich sind die unsensiblen elektrischen Verbraucher und im zweiten Bordnetz-Bereich sind die sensiblen elektrischen Verbraucher angeordnet.

Ein Stromfluss vom zweiten Bordnetz-Bereich in den ersten Bordnetz-Bereich wird erfindungsgemäß durch eine Sperrvorrichtung, bevorzugt eine Halbleiterdiode zwischen erstem und zweitem Bordnetz-Bereich, weitgehend verhindert. Im ersten Bordnetz-Bereich ist der elektrische Generator und eine Fahrzeugbatterie parallel zu den ersten elektrischen Verbrauchern und im zweiten Bordnetz-Bereich ist ein Energiespeicher, eine Batterie oder ein Kondensator, vorzugsweise ein Doppelschicht-Kondensator bzw. ein sog. Supercap, parallel zu den zweiten elektrischen Verbrauchern vorgesehen. Der Doppelschicht-Kondensator wird während des Betriebs des Kraftfahrzeugs regelmäßig auf eine Spannung aufgeladen, die die sensiblen zweiten elektrischen Verbraucher betriebsbereit hält, während er sich entlädt.

Während der Phasen, in denen der Doppelschicht-Kondensator nicht aufgeladen werden muss, wird die Spannung des Generators soweit reduziert, dass die Betriebsbereitschaft der ersten elektrischen Verbraucher (noch) gegeben ist (vgl. DE 2006 002 985). Dabei ist die Spannung am Doppelschicht-Kondensator höher als an den ersten (unsensiblen) Verbrauchern und die Sperrvorrichtung bzw. Diode verhindert ein Entladen des Doppelschicht-Kondensators über die Verbraucher des ersten Bordnetz-Bereichs. Umgekehrt ermöglicht die Sperrvorrichtung einen elektrischen Stromfluss von dem elektrischen Generator über die Sperrvorrichtung bzw. Diode in den zweiten Bordnetz-Bereich, wenn die Ausgangs-Spannung des Generators zur erneuten Aufladung des Doppelschicht-Kondensators angehoben wird.

Die Überwachung des Ladezustands bzw. der Ausgangs-Spannung des Doppelschicht-Kondensators erfolgt über eine Ladesteuerungs-Vorrichtung, die den Generator derart ansteuert, dass dieser bei einem Unterschreiten einer Schwellenspannung am Kondensator die Spannung zum Laden erhöht und nachfolgend wieder reduziert.

Gegenüber dem bekannten Stand der Technik kann der Generator derart angesteuert werden, dass er während des Betriebs des Kraftfahrzeugs überwiegend lediglich eine niedrigere Spannung zum Betrieb der unsensiblen Verbraucher bereitstellt. Beim bekannten Stand der Technik war es hingegen notwendig, die Spannung dauerhaft soweit anzuheben, dass auch den sensiblen Verbrauchern stets eine ausreichende Betriebsspannung zur Verfügung stand.

Durch die erfindungsgemäße Lösung kann also die Leistungsaufnahme des Generators während langer Zeiträume reduziert und damit der Kraftstoff-Verbrauch und der CO₂-Ausstoss des Kraftfahrzeugs deutlich verringert werden.

Bei einer bevorzugten Ausführungsform der Erfindung ist die Zeitdauer und/oder die Höhe der Anhebung der elektrischen Spannung im zweiten Bordnetz-Bereich vom Energieverbrauch der ein oder mehreren zweiten elektrischen Verbraucher und/oder von der Kapazität des Kondensators im zweiten Bordnetz-Bereich abhängig.

Alternativ oder ergänzend ist bei einer weiteren bevorzugten Ausführung der Erfindung vorgesehen, dass die Zeitdauer und/oder Höhe der Anhebung proportional zum Energieverbrauch der ein oder mehreren zweiten elektrischen Verbraucher und/oder proportional zur Kapazität des Kondensators ist.

Durch diese Maßnahmen kann der Ladevorgang, insbesondere im Sinne einer weiteren Reduzierung des CO₂-Ausstosses, optimiert werden.

Bei einer anderen bevorzugten Ausführungsform der Erfindung ist vorgesehen, dass die ersten elektrischen Verbraucher eine Betriebsspannung zu ihrem Betrieb benötigen, die in einem ersten Spannungsbereich liegt und die zweiten elektrischen Verbraucher eine Betriebsspannung zu ihrem Betrieb benötigen, die in einem zweiten Spannungsbereich liegt. Der zweite Spannungsbereich ist bevorzugt enger als der erste Spannungsbereich, d.h. dass die zweiten elektrischen Verbraucher ggü. den ersten elektrischen Verbrauchern sog. sensible elektrische Verbraucher des Kraftfahrzeugs sind.

Alternativ oder ergänzend ist bei einer bevorzugten Ausführungsform der Erfindung vorgesehen, dass die unsensiblen ersten elektrischen Verbraucher weitgehend im ersten Bordnetz-Bereich und die sensiblen zweiten elektrischen Verbraucher weitgehend im zweiten Bordnetz-Bereich des Kraftfahrzeugs vorgesehen sind.

Durch diese Maßnahme lässt sich die Erfindung technisch besonders einfach realisieren.

Bei einer konkreten Ausgestaltung der Erfindung für ein klassisches 12-Volt-Bordnetz wird vorgeschlagen, dass der im ersten Bordnetz-Bereich beim Betrieb des Fahrzeugs vorherrschende Spannungsbereich eine Spannung von ca. 10 bis 16 Volt und der im zweiten Bordnetz-Bereich beim Betrieb des Fahrzeugs vorherrschende Spannungsbereich eine Spannung von ca. 11 bis 13 Volt umfasst.

Bei einer weiteren Ausgestaltung der Erfindung ist vorgesehen, dass der Kondensator nach dem Betrieb des Fahrzeugs vom zweiten Bordnetz-Bereich getrennt, dann bevorzugt entladen und beim erneuten Betrieb des Fahrzeugs wiederum aufgeladen und mit dem Bordnetz-Bereich elektrisch verbunden und geladen wird.

Hierdurch wird die Sicherheit des Bordnetzes bei Kurzschlüssen erhöht und der hohe Ruhestrom von Superkondensatoren (Supercaps bzw. SCs) in den Standphasen vermieden. Das Vorladen und Ankoppeln/Abtrennen des Supercaps an das Bordnetz geschieht vorzugsweise durch eine separate Steuer-/Leistungseinheit, die bevorzugt zugleich die Diagnose des SCs (z.B. Kapazitäts- und Widerstands-Bestimmung während des Vorladebetriebs) übernimmt.

Bei einer bevorzugten Ausführungsform der Erfindung ist vorgesehen, dass der Speicher im zweiten Netz eine Batterie oder vorzugsweise ein Kondensator bzw. ein Doppelschicht-Kondensator bzw. ein sog. Supercap ist.

Solche Kondensatoren zeichnen sich durch hohe Ladungsdichten aus, so dass bei kleinen Abmessungen große Kapazitäten bereitgestellt werden können. Ferner können solche Kondensatoren schnell bei hohen Strömen aufgeladen werden, was Vorteile im Hinblick auf eine CO₂-Reduzierung hat.

Das erfindungsgemäße System wird nachfolgend anhand einer Zeichnung näher erläutert.

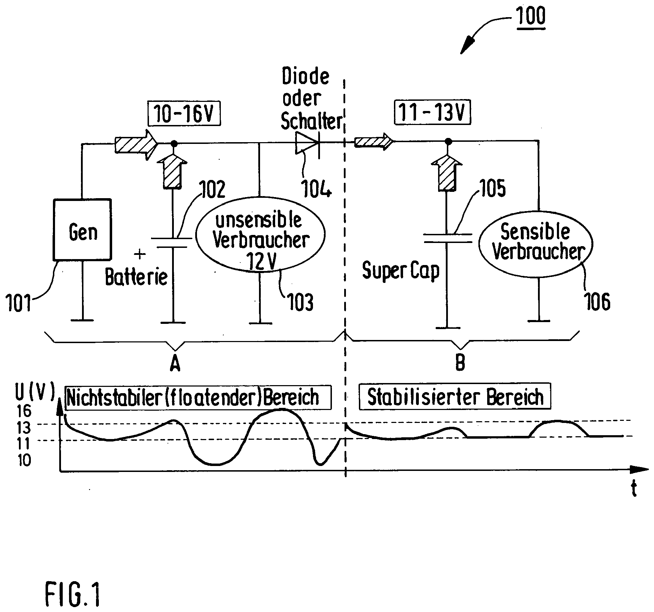

- Figur 1: zeigt ein Bordnetz aus zwei Bordnetz-Bereichen, die durch eine Diode elektrisch miteinander verbunden sind.

Das erfindungsgemäße System bzw. erfindungsgemäße Bordnetz 100 zur Spannungsversorgung von elektrischen Verbrauchern 103 und 106 besteht aus zwei Bordnetz-Bereichen A und B. Der erste Bordnetz-Bereich A weist einen elektrischen Generator 101, eine Fahrzeugbatterie 102 und mehrere erste elektrische Verbraucher 103 auf. Der zweite Bordnetz-Bereich B weist einen Energiespeicher in Form eines Kondensators bzw. Supercaps 105 und mehrere zweite elektrische Verbraucher 106 auf.

Zwischen den zwei Bordnetz-Bereichen A und B ist eine Sperrvorrichtung 104 in Form einer Halbleiterdiode vorgesehen, die einen Stromfluss vom ersten Bordnetz-Bereich A in den zweiten Bordnetz-Bereich B ermöglicht und einen umgekehrten Stromfluss vom zweiten Bordnetz-Bereich B in den ersten Bordnetz-Bereich A weitgehend verhindert.

Die Ausgangsspannung des elektrischen Generators 101 wird angehoben und der Energiespeicher bzw. Kondensator 105 aufgeladen, wenn ein erster Schwellenwert der elektrischen Spannung im zweiten Bordnetz-Bereich B unterschritten wird.

Die ersten elektrischen Verbraucher 103 benötigen eine Betriebsspannung zu ihrem Betrieb, die in einem ersten Spannungsbereich von 10 bis 16 Volt liegt, d.h. es handelt sich um sog. "unsensible" Verbraucher. Die zweiten elektrischen Verbraucher 106 benötigen eine Betriebsspannung zu ihrem Betrieb, die in einem zweiten Spannungsbereich von 11 bis 13 Volt liegt, d.h. es handelt sich um sog. "sensible" Verbraucher.

Der erste Bordnetz-Bereich A ist, wie der Graph "Spannung als Funktion der Zeit" in Fig. 1 schematisch zeigt, durch relativ hohe Spannungsschwankungen zwischen ca. 10 und 16 Volt gekennzeichnet (nichtstabiler bzw. schwankender Bereich).

Demgegenüber ist der zweite Bordnetz-Bereich B durch relativ geringe Spannungsschwankungen zwischen 11 und 13 Volt gekennzeichnet (stabilisierter Bereich).

Die Funktionsweise und die Vorteile des erfindungsgemäßen Systems wurden bereits oben beschrieben, so dass an dieser Stelle lediglich Bezug hierauf genommen wird.

## Patentansprüche

1. Bordnetz zur Spannungsversorgung von elektrischen Verbrauchern eines Kraftfahrzeugs
- bestehend aus mindestens zwei Bordnetz-Bereichen (A, B), wobei der erste Bordnetz-Bereich (A) einen elektrischen Generator (101), eine Fahrzeugbatterie (102) sowie ein oder mehrere erste elektrische Verbraucher (103) und der zweite Bordnetz-Bereich (B) einen Energiespeicher in Form eines Kondensators (105) und ein oder mehrere zweite elektrische Verbraucher (6) aufweist,
- dass zwischen den zwei Bordnetz-Bereichen (A, B) eine Sperrvorrichtung (104) vorgesehen ist, wie insbesondere eine Halbleiterdiode oder ein Leistungsschalter, die einen Stromfluss vom ersten Bordnetz-Bereich (A) in den zweiten Bordnetz-Bereich (B) ermöglicht und einen umgekehrten Stromfluss vom zweiten Bordnetz-Bereich (B) in den ersten Bordnetz-Bereich (A) weitgehend verhindert,
- dass die Ausgangsspannung des elektrischen Generators (101) angehoben und der Kondensator aufgeladen wird, wenn ein erster Schwellenwert der elektrischen Spannung im zweiten Bordnetz-Bereich (B) unterschritten wird,
- dass die Spannung des Generators (101) während der Phasen in denen der Kondensator nicht aufgeladen werden muss soweit reduziert wird, dass die Betriebsbereitschaft der ersten elektrischen Verbraucher noch gegeben ist, und
- die Zeitdauer und/oder Höhe der Anhebung der elektrischen Spannung im zweiten Bordnetz-Bereich (B) vom Energieverbrauch der ein oder mehreren-_ zweiten elektrischen Verbraucher (106) und/oder von der Kapazität des Kondensators (105) im zweiten Bordnetz-Bereich (B) abhängt.

2. Bordnetz nach Anspruch 1, **dadurch gekennzeichnet, dass** die Zeitdauer und/oder Höhe der Anhebung proportional zum Energieverbrauch der ein oder mehreren zweiten elektrischen Verbraucher (106) und/oder proportional zur Kapazität des Kondensators (105) ist.

3. Bordnetz nach einem der vorstehenden Ansprüche, **dadurch gekennzeichnet, dass** die ersten elektrischen Verbraucher (103) eine Betriebsspannung zu ihrem Betrieb benötigen, die in einem ersten Spannungsbereich liegt und die zweiten elektrischen Verbraucher (106) eine Betriebsspannung zu ihrem Betrieb benötigen, die in einem zweiten Spannungsbereich liegt und der zweite Spannungsbereich enger als der erste Spannungsbereich ist, d.h. dass die zweiten elektrischen Verbraucher (106) ggü. den ersten elektrischen Verbrauchern (103) sog. sensible elektrische Verbraucher des Kraftfahrzeugs sind.

4. Bordnetz nach Anspruch 3, **dadurch gekennzeichnet, dass** die unsensiblen ersten elektrischen Verbraucher (103) weitgehend im ersten Bordnetz-Bereich (A) und die sensiblen zweiten elektrischen Verbraucher (106) weitgehend im zweiten Bordnetz-Bereich des Kraftfahrzeugs vorgesehen sind.

5. Bordnetz nach einem der vorstehenden Ansprüche, **dadurch gekennzeichnet, dass** der im ersten Bordnetz-Bereich (A) beim Betrieb des Fahrzeugs vorherrschende Spannungsbereich eine Spannung von ca. 10 bis 16 Volt und der im zweiten Bordnetz-Bereich (B) beim Betrieb des Fahrzeugs vorherrschende Spannungsbereich eine Spannung von ca. 11 bis 13 Volt umfasst.

6. Bordnetz nach einem der vorstehenden Ansprüche, **dadurch gekennzeichnet, dass** der Kondensator (105) nach dem Betrieb des Fahrzeugs vom zweiten Bordnetz-Bereich (B) getrennt und beim Betrieb des Fahrzeugs erneut auf Bordnetzspannung vorgeladen und dann mit dem Bordnetz-Bereich (B) elektrisch verbunden wird.

7. Bordnetz nach einem der vorstehenden Ansprüche, **dadurch gekennzeichnet, dass** der Kondensator ein Doppelschicht-Kondensator bzw. ein sog. Supercap ist.

8. Bordnetz nach einem der vorstehenden Ansprüche, **dadurch gekennzeichnet, dass** der Energiespeicher eine Batterie ist.

9. Bordnetz nach Anspruch 7, **dadurch gekennzeichnet, dass** das Vorladen und/oder Ankoppeln bzw. Trennen des Supercaps an das Bordnetz durch eine separate Steuer-/Leistungseinheit erfolgt, die bevorzugt auch die Diagnose des Supercaps, insbesondere eine Kapazitäts- und/oder Widerstands-Bestimmung, während des Vorladebetriebs übernimmt.

## Claims

1. A vehicle electrical system for supplying voltage to electrical loads of a motor vehicle,
- comprising at least two vehicle electrical system regions (A, B), wherein the first vehicle electrical system region (A) comprises an electrical generator (101), a vehicle battery (102) and one or more first electrical loads (103), and the second vehicle electrical system region (B) comprises an energy accumulator in the form of a capacitor (105) and one or more second electrical loads (6),
- wherein a blocking apparatus (104), more especially such as a semiconductor diode or a circuit breaker, is provided between the two vehicle electrical system regions (A, B) and enables a flow of current from the first electrical vehicle system region (A) into the second vehicle electrical system region (B) and largely prevents a reverse flow of current from the second vehicle electrical system region (B) into the first vehicle electrical system region (A),
- wherein the output voltage of the electrical generator (101) is increased and the capacitor is charged if a first threshold value of the electrical voltage is undershot in the second vehicle electrical system region (B),
- wherein the voltage of the generator (101) during the phases in which the capacitor does not have to be charged is reduced insofar as the first electrical load is still ready for operation, and
- the time duration and/or level of increase of the electrical voltage in the second vehicle electrical system region (B) are/is dependent on the energy consumption of the one or more second electrical loads (106) and/or on the capacitance of the capacitor (105) in the second electrical vehicle system region (B).

2. A vehicle electrical system according to claim 1, **characterised in that** the time duration and/or level of increase are/is proportional to the energy consumption of the one or more second electrical loads (106) and/or are/is proportional to the capacitance of the capacitor (105).

3. A vehicle electrical system according to any one of the preceding claims, **characterised in that** the first electrical loads (103) require an operating voltage for their operation which lies in a first voltage range and the second electric loads (106) require an operating voltage for their operation which lies in a second voltage range, and the second voltage range is narrower than the first voltage range, i.e. the second electrical loads (106) are what are known as sensitive electrical loads of the vehicle compared to the first electrical loads (103).

4. A vehicle electrical system according to claim 3, **characterised in that** the non-sensitive first electrical loads (103) are provided largely in the first vehicle electrical system region (A) and the sensitive second electrical loads (106) are provided largely in the second vehicle electrical system region of the motor vehicle.

5. A vehicle electrical system according to any one of the preceding claims, **characterised in that** the voltage range prevailing in the first vehicle electrical system region (A) during operation of the vehicle comprises a voltage from approximately 10 to 16 volts and the voltage range prevailing in the second vehicle electrical system region (B) during operation of the vehicle comprises a voltage from approximately 11 to 13 volts.

6. A vehicle electrical system according to any one of the preceding claims, **characterised in that** the capacitor (105) is separated from the second vehicle electrical system region (B) after operation of the vehicle and is precharged again to vehicle electrical system voltage during operation of the vehicle and is then electrically connected to the vehicle electrical system region (B).

7. A vehicle electrical system according to any one of the preceding claims, **characterised in that** the capacitor is a double-layer capacitor or what is known as a supercap.

8. A vehicle electrical system according to any one of the preceding claims, **characterised in that** the energy accumulator is a battery.

9. A vehicle electrical system according to claim 7, **characterised in that** the precharging and/or coupling and separation of the supercap to/from the vehicle electrical system are performed by a separate control/power unit, which preferably also performs the diagnosis of the supercap, more especially determines a capacitance and/or resistance, during the precharging.

## Revendications

1. Réseau de bord pour l'alimentation en tension de charges électriques d'un véhicule automobile,
- composé d'au moins deux zones de réseau de bord (A, B), la première zone de réseau de bord (A) ayant un générateur électrique (101), une batterie (102) ainsi qu'une ou plusieurs charges électriques (103), et
la seconde zone de réseau de bord (B) ayant un accumulateur d'énergie sous la forme d'un condensateur (105) ainsi qu'une ou plusieurs secondes charges électriques,
- un dispositif de blocage (104) est prévu entre les deux zones de réseau de bord (A, B) tel que notamment une diode semi-conductrice ou un commutateur de puissance qui permet le passage du courant de la première zone de réseau de bord (A), dans la seconde zone de réseau de bord (B) et bloque le passage de courant inverse, de la seconde zone de réseau de bord (B) vers la première zone de réseau de bord (A),
- la tension de sortie du générateur électrique (101) se relève et le condensateur se charge lorsque la tension électrique de la seconde zone de réseau de bord (B) dépasse un premier seuil,
- la tension du générateur (101) est réduite pendant des phases dans lesquelles le condensateur ne se charge pas, de façon que les premières charges électriques puissent fonctionner, et
- la durée et/ou l'amplitude du relèvement de la tension électrique dans la seconde zone de réseau de bord (B) dépend de la consommation d'énergie d'une ou plusieurs secondes charges électriques (106) et/ou de la capacité du condensateur (105) dans la seconde zone de réseau embarqué (B).

2. Réseau de bord selon la revendication 1,
**caractérisé en ce que**
la durée et/ou l'amplitude du relèvement sont proportionnels à la consommation d'énergie d'une ou plusieurs secondes charges électriques (106) et/ou proportionnels à la capacité du condensateur (105).

3. Réseau de bord selon la revendication 1,
**caractérisé en ce que** les premières charges électriques (103) nécessitent, pour leur fonctionnement, une tension de fonctionnement qui se situe dans une première plage de tension et les secondes charges électriques (106) nécessitent, pour leur fonctionnement, une tension qui se situe dans une seconde plage de tension, cette seconde plage de tension étant plus étroite que la première plage de tension, c'est-à-dire que les secondes charges électriques (106) sont, par rapport aux premières charges électriques (103), des charges électriques dites « sensibles » du véhicule.

4. Réseau de bord selon la revendication 3,
**caractérisé en ce que**
les premières charges électriques non sensibles (103) sont en majorité dans la première zone de réseau de bord (A) et les secondes charges électriques sensibles (106) sont en majorité dans la seconde zone de réseau de bord du véhicule.

5. Réseau de bord selon l'une des revendications précédentes,
**caractérisé en ce que**
la plage de tension dans la première zone de réseau de bord (A) pendant le fonctionnement du véhicule est une tension de l'ordre de 10-16 volts et celle de la seconde zone de réseau embarqué (B) pendant le fonctionnement du véhicule, est une tension dans une plage de tension comprise entre environ 11 et 13 volts.

6. Réseau de bord selon l'une des revendications précédentes,
**caractérisé en ce qu'**
après le fonctionnement du véhicule, le condensateur (105) est coupé de la seconde zone de réseau de bord (B) et pendant le fonctionnement du véhicule il est de nouveau préalablement chargé à la tension du réseau embarqué, puis il est relié électriquement à la zone de réseau embarqué (B).

7. Réseau de bord selon l'une des revendications précédentes,
**caractérisé en ce que**
le condensateur est un condensateur à double couche encore appelé supercondensateur.

8. Réseau de bord selon l'une des revendications précédentes,
**caractérisé en ce que**
l'accumulateur d'énergie est une batterie.

9. Réseau de bord selon la revendication 7,
**caractérisé en ce que**
la précharge et/ou le branchement ou la coupure du supercondensateur par rapport au réseau embarqué se fait par une unité de commande / unité de puissance distincte qui assure de préférence également le diagnostique du supercondensateur, notamment il détermine la capacité et/ou la résistance pendant le mode de précharge.
